Europäisches Patentamt

(19) European Patent Office

Office européen des brevets

(11) Publication number: **0 099 082**

**A1**

(12) # EUROPEAN PATENT APPLICATION

(21) Application number: **83106721.0**

(22) Date of filing: **08.07.83**

(51) Int. Cl.³: **F 16 H 41/20**

(30) Priority: **16.07.82 GB 8220673**
**21.02.83 GB 8304732**

(43) Date of publication of application:
**25.01.84 Bulletin 84/4**

(84) Designated Contracting States:
**BE DE FR IT SE**

(71) Applicant: BROCKHOUSE TRANSMISSIONS LIMITED
Victoria Works Hill Top
West Bromwich West Midlands B70 0SN(GB)

(72) Inventor: Schofield, Norman
75 Brenton Road
Wolverhampton West Midlands WV4 5NS(GB)

(74) Representative: Leach, John Nigel et al,
FORRESTER & BOEHMERT Widenmayerstrasse 4/1
D-8000 München 22(DE)

(54) Hydrodynamic torque transmitter.

(57) A hydrodynamic torque transmitter comprises a casing and first and second bladed members, said members being mounted for rotation relative to a frame, each bladed member having a peripheral wall and a plurality of blades extending transversely thereto so as to define a pocket between each pair of adjacent blades and bounded by the blades and peripheral wall, the pockets each having an open mouth, the open mouths of the pockets of one member being disposed in face-to-face relationship with the open mouths of the pockets of the other member so that the pockets co-operate to define a potential circuit for fluid around which, in use, fluid circulates to transmit torque between the bladed members, there being a reaction member disposed in the potential circuit between the first and second members and being prevented from rotation relative to the frame at least in the opposite direction of rotation to the first and second members, the blades of the first and second members and of the reaction member being disposed and arranged to produce a torque multiplication effect when, in use, fluid flows past the reaction member blades, each pocket comprising an unobstructed volume bounded by the blades and the peripheral wall of the member and having an unobstructed open mouth bounded by the free edges of the blades and peripheral wall. The fluid circuit may be partly filled with fluid, the volume of fluid being such that, in use, at low slip ratios the fluid circulation in said circuit is such that the fluid does not at least substantially contact the reaction member whereby the transmitter has the characteristics of a fluid coupling, whilst at high slip ratios, the fluid circulation in said circuit is such that the fluid does contact the reaction member to provide a torque multiplication effect so that the transmitter functions as a torque converter.

FIG 1

./...

FIG 2

Title: "Hydrodynamic Torque Transmitter"

Description of Invention

This invention relates to a hydrodynamic torque transmitter and to a transmission incorporating such a transmitter.

One known type of such torque transmitter is that commonly known as a fluid coupling in which fluid circulates around a circuit between bladed impeller and turbine members which can rotate relative to a fixed frame.

Another known type of such torque transmitter is commonly known as a torque converter in which fluid circulates around a circuit between bladed impeller and turbine members which can rotate relative to a fixed frame, and in which an additional bladed member, known as a reaction member, is provided in the fluid circuit between the impeller and turbine and which is non-rotatable relative to the frame, the blades of the members being disposed and arranged to provide a torque multiplication effect.

A further known type of such transmitter is that commonly known as a torque converter-coupling and this is similar to a torque converter except that the reaction member is connected to the frame by way of a freewheel clutch so as to be free to rotate in the same direction as the impeller and turbine but is locked relative to the frame against rotation in the reverse direction.

A transmission incorporating such a transmitter comprises a prime mover, e.g. a diesel engine, and a drive train to a driven element such as a wheel, the impeller being driven by the prime mover and the drive train being driven by the turbine. The drive train may include a multi-ratio change-speed gearbox which may be manually, automatically or semi-automatically shifted between ratios.

A torque converter-coupling is normally used in such a transmission in preference to a torque converter or fluid coupling because of the better efficiency of the torque converter-coupling where the output torque demand for a particular driving condition does not require torque multiplication and the freewheel allows the reaction member to idle minimising drag losses.

A torque converter-coupling has advantages over a fluid coupling because of its torque multiplication ability which can allow fewer gear steps to be used in the multi-ratio change-speed gearbox for a given set of operating parameters. Moreover, a torque converter coupling is usually a "softer" match when the output is stalled having a lower torque capacity for a given engine speed. For example, where a vehicle such as a 'bus' is left in gear at a stop, the power losses are lower.

Fluid coupling efficiencies tend to be higher than those of torque converter-couplings in the high output speed or low slip running conditions, this is due to the two bladed member feature and more simple design. Torque converter-coupling designs which incorporate a "lock-up" or "by-pass" clutch are commonly used to improve efficiency when the torque multiplication effect is not used. Many vehicles use the torque converter coupling purely as a starting device, the "lock-up" or "by-pass" clutch being used for general driving. However, the provision of a "lock-up" or "by-pass" clutch has the disadvantage of adding weight, bulk and cost to the installation.

The present invention is intended to provide a hydrodynamic torque transmitter of low cost which, at high slip ratios, will give torque multiplication characteristics and which, at low slip ratios, will attain efficiencies comparable with those of fluid couplings.

Accordingly the present invention provides a hydrodynamic torque transmitter comprising a casing and first and second bladed members, said members being mounted for rotation relative to a frame, each bladed member having a peripheral wall and a plurality of blades extending transversely thereto so as to define a pocket between each pair of adjacent blades and bounded by the blades and peripheral wall, the pockets each having an open mouth, the open mouths of the pockets of one member being disposed in face-to-face relationship with the open mouths of the pockets of the other member so that the pockets co-operate to define a potential circuit for fluid around which, in use, fluid circulates to transmit torque between the bladed members, there being a reaction member disposed in the potential circuit between the first and second members and being prevented from rotation relative to the frame at least in the opposite direction of rotation to the first and second members, the blades of the first and second members and of the reaction member being disposed and arranged to produce a torque multiplication effect when, in use, fluid flows past the reaction member blades, each pocket comprising an unobstructed volume bounded by the blades and the peripheral wall of the member and having an unobstructed open mouth bounded by the free edges of the blades and peripheral wall.

Preferably, the casing rotates with one of said first and second members but, alternatively, both the first and second members may rotate relative to the casing.

The first member may be an impeller and the second member a turbine.

The reaction member may be fixed relative to the frame.

Alternatively, the reaction member may be provided with free-wheel clutch means to permit the reaction member to rotate relative to the frame in the same direction as the impeller and turbine but prevent rotation in the reverse direction.

Means may be provided for circulating fluid into and out of the fluid circit, said means may include radial passage means provided in the reaction member blades for egress of fluid.

According to another aspect of the invention, we provide a hydrodynamic torque transmitter installation comprising a torque transmitter according to the first aspect of the invention, wherein said fluid circuit is partly filled with fluid, the volume of fluid being such that, in use, at low slip ratios the fluid circulation in said circuit is such that the fluid does not at least substantially contact the reaction member whereby the transmitter has the characteristics of a fluid coupling, whilst at high slip ratios, the fluid circulation in said circuit is such that the fluid does contact the reaction member to provide a torque multiplication effect so that the transmitter functions as a torque converter where the reaction member is fixed to the frame.

The fluid may be maintained within the fluid circuit.

Alternatively, the fluid may be circulated into and out of the fluid circuit and, where said radial passage means are provided in the reaction member blades, then, in use, when the installation is operated under conditions of:

(a)  high slip, said circuit is full of oil; and

(b)  low slip, centrifuging of the oil cases oil to egress from said circuit through said radial passage means, said reaction member not rotating and therefore not providing a counter head.

The radial passage means may include a portion extending radially outwardly of their associated reaction member blades.

According to another aspect of the invention, we provide a hydrodynamic torque transmitter installation comprising a torque transmitter according to the first aspect of the invention wherein said circuit is partly filled with fluid, the volume of fluid being such that, in use, at low slop ratios fluid circulation in said circuit is such that the fluid does not at least substantially contact the reaction member whereby the transmitter has the characteristics of a fluid coupling, whilst at high slip ratios, the fluid circulation in said circuit is such that the fluid does contact the reaction member to provide a torque multiplication effect so that the transmitter functions as a torque converter-coupling where the reaction member is coupled to the frame through a free-wheel clutch.

The fluid circuit may be maintained fully filled with fluid.

Because the transmitter of the present invention is not provided with the usual "torus" or "guide" hereinafter referred to as "guide" element of the turbine and impeller of a conventional torque converter or torque converter-coupling (which guide element is provided to constrain the circulation of fluid positively to the bladed circuit, eliminating spill off (and hence efficiency loss) as the oil passes along a particular blade channel), the complications in manufacture of the turbine and impeller members occasioned by the need to provide a separate core for each pocket is avoided in the present invention, thereby minimising production costs.

The blades of the impeller and turbine are made of simple configuration so that again simple casting moulds may be used without the need for separate cores. Preferably at least the impeller has simple radial blades similar to those provided in a conventional fluid coupling and the turbine may also have similar blades although a small amount of "angle" or turn may be provided on one or both of the impellor and turbine to obtain particular characteristics for a given size of hydrodynamic unit but not so much as to require expensive moulding/casting techniques.

Embodiments of the invention will now be described by way of example, with reference to the accompanying drawings, wherein:-

FIGURE 1 is a half section through a hydrodynamic transmitter embodying the invention;

FIGURE 2 is a half section through another embodiment of the invention;

FIGURE 3 is a half section through a further embodiment of the invention;

FIGURE 4 is a half section through a further embodiment of the invention;

FIGURE 5 is a half section through a conventional torque converter;

FIGURE 6 is a half section through a conventional torque converter-coupling;

FIGURE 7 is a half section through a further hydrodynamic transmitter not embodying the invention;

FIGURE 8 is a half section through a still further hydrodynamic transmitter not embodying the invention;

FIGURE 9 is a graphical representation of the performance characteristics of the torque converter and torque converter-coupling shown in Figures 5 and 6;

FIGURE 10 is a graphical representation comparing the performance characteristics of a conventional fluid coupling and of the torque converter-coupling shown in Figure 6;

FIGURE 11 is a graphical representation of the performance characteristics of the transmitter illustrated in Figure 1 and Figure 2 shown compared with the characteristics represented in Figure 9;

FIGURE 12 is a graphical representation of the performance characteristics of the transmitter illustrated in Figure 4, shown compared with the characteristics of Figure 9;

FIGURE 13 is a graphical representation of the performance characteristics of the transmitter of Figure 3, shown compared with the characteristics of Figure 9;

FIGURE 14 is a graphical representation of the performance characteristics of the transmitter shown in Figure 7, shown compared with the characteristics of Figure 9;

FIGURE 15 is a graphical representation showing performance characteristics of a supercharged diesel engine compared with those attained by a torque converter and a fluid coupling;

FIGURE 16 is a half section through a further embodiment of the invention showing operation in a "high slip" condition;

FIGURE 17 is a view similar to that of Figure 16 but showing a "low slip" condition; and

FIGURE 18 is a fragmentary cross-sectional view through the reaction member blade of the embodiments shown in Figures 16 and 17.

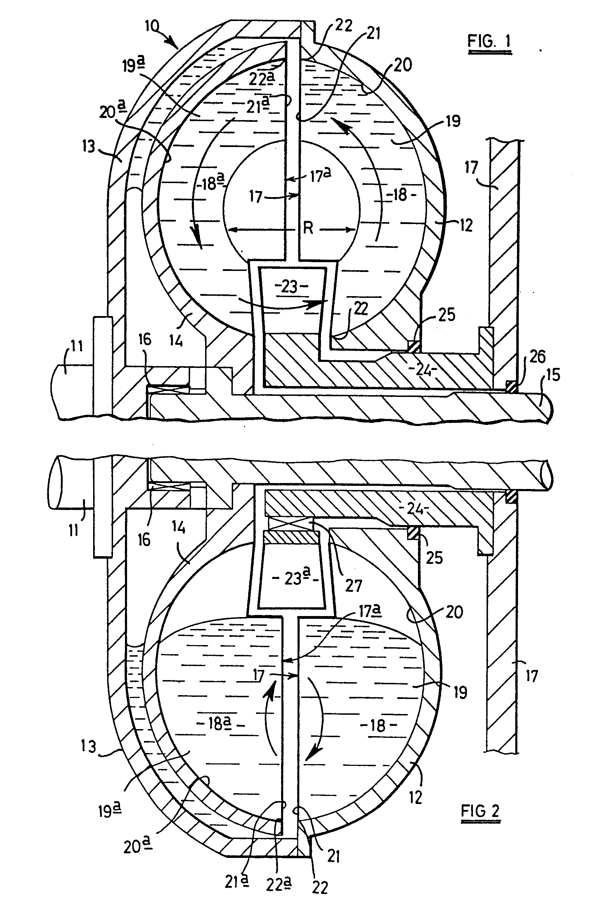

Referring to Figure 1, there is shown a hydrodynamic torque transmitter embodying the invention and which is of generally conventional torque converter form, comprising of the usual annular hollow two-part casing 10. The half of the casing 10 which is more remote from an input shaft 11 comprises a bladed impeller 12 driven from the shaft 11 by the other casing half 13.

In the other casing half 13 there is positioned a bladed turbine 14 connected to an output shaft 15 journalled in bearings 16 provided on the casing half 13 and bearings (not shown) in a fixed frame 17. The impeller 12 and turbine 14 respectively constitute first and second torque transmitting members between which torque is transmitted by fluid which flows in a fluid circuit defined between the impeller and turbine.

A pocket 18 is defined between each pair of adjacent blades 19 and the peripheral wall 20 of the impeller and having an open mouth M defined by the free edges 21 of the blades, and the circumferentially extending edge 22 of the peripheral wall 20 between adjacent blades 19 of the impeller 12.

In the case of the turbine 14, similar pockets 18a are defined between adjacent blades 19a being bounded by the blades 19a and the peripheral wall 20a and having an open mouth Ma defined by the free edges 21a and 22a of the blades and peripheral wall.

The number of blades in impeller and turbine are generally different to minimise hydraulic shocks caused by blades passing each other.

As shown in Figure 1, the peripheral walls 20 and 20a are part circular and thus the outer periphery of the potential fluid circuit provided by the cooperating impeller and turbine is circular except for the small gaps illustrated. If desired, the fluid circuit may deviate from a true circle and may be elliptical, have a rectangular section with large corner radii, or even be asymmetrical.

Disposed at the inner periphery of the potential fluid circuit is a bladed reaction member 23 which is held against rotation by virtue of a sleeve 24 fixed to the frame 17. A seal 25 is provided between the impeller 12 and sleeve 24 and a seal 26 is provided between the frame 17 and the output shaft 15.

It is to be noted that the impeller and turbine do not have the conventional "guide" or "torus" element as conventionally provided in a torque converter to define a toroidal region between the peripheral wall 20 and the core member across which the blades 19 extend. In the present invention, the pockets between the blades 19 are not of toroidal shape but have a completely unobstructed open mouth M, Ma, the boundary of which is defined solely by the free edges 21, 21a and 22, 22a of the blades and wall 20, 20a therebetween as described above.

The blades 19, of the impeller lie in a plane radial to and containing the axis of rotation of the impeller and thus are simple "radial" blades similar to those provided in a conventional fluid coupling. The blades 19a of the turbine are of similar configuration but the blades of one or both of the turbine and impeller may be provided with a small extent of "angle" or other non-planar contour to give a desired extent of torque multiplication in co-operation with the reaction member the blades of which are conventionally shaped. By virtue of the absence of a guide member and the simple configuration of the impeller and turbine blades, (any contouring of the turbine and impeller blades being such as not to negate the following) manufacture of the impeller and blades is facilitated and hence rendered less costly than is the case of a conventional torque converter or torque converter-coupling. This is because conventionally separate core elements are required for each pocket to provide the "guide" element and desired blade configuration. This results in an expensive and time consuming pattern making and casting operation which is avoided by the present invention.

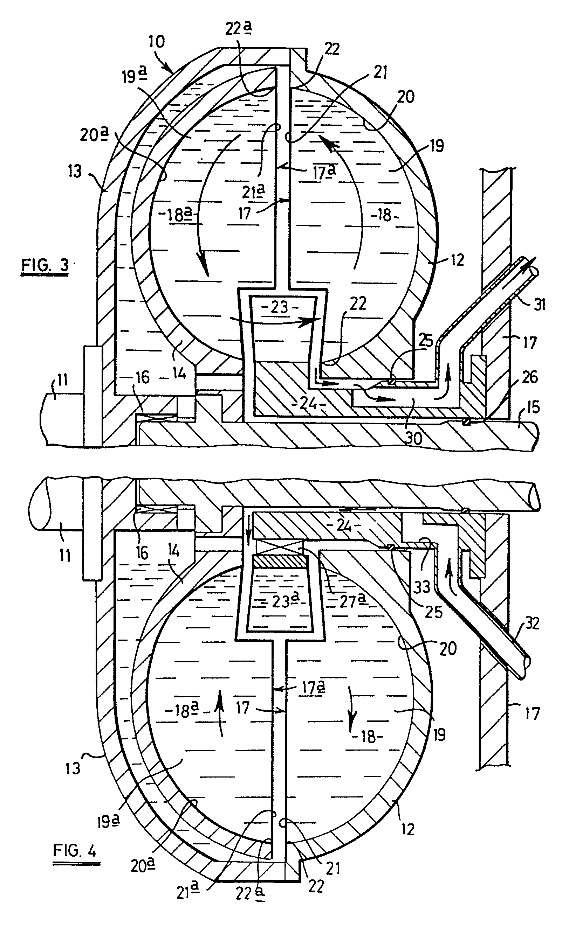

Referring now to Figure 2, a modification of the transmitter described and illustrated with reference to Figure 1 is shown and the same reference numerals have been used in Figure 2 as were used in Figure 1 to refer to corresponding parts.

The only difference between the transmitter of Figure 2 compared to that of Figure 1 is in the mounting of the reaction member, referred to as 23a in Figure 2. In Figure 2 the reaction member 23a is connected to the sleeve 24 through a one-way or freewheel clutch 27 so that the reaction member is permitted to rotate relative to the sleeve 24 and hence to the frame 17 in the same direction as do the impeller and turbine, whilst rotation in the reverse direction is prevented. Thus the embodiment shown in Figure 2 is analogous to a conventional torque converter-coupling.

In use of both of the above described embodiments of the invention, the hydrodynamic transmitter described above and illustrated with reference to Figure 1 or Figure 2 is not completely filled with fluid, so that it is only partially filled.

Oil circulates along the above described potential circuit at a rate dependent upon the slip between the impeller and turbine. At high slip conditions, for example at stall where the turbine is stopped, the impeller will induce a centrifugal head in the fluid which will enter the turbine at the radially outermost part of its periphery and then feed directly back into the impeller at the radially inner periphery thereof via the reaction member.

However, in the condition where slip between the impeller and turbine is low, the head due to difference in speeds of the impeller and turbine will be lower and a condition is reached where the fluid tends to centrifuge away from the axis of rotation and since the unit is not full of oil, the unfilled volume being equal to that occupied by the reaction member or greater than this, then the oil will circuit along a part of the potential circuit which does not include the reaction member thus removing oil drag losses from the reaction member. In summary, under conditions of high slip the fluid occupies the part of the potential fluid circuit illustrated in Figure 1 and thus flows past the reaction member 23. The central region R of the potential circuit is empty of fluid, this area approximates to the region lying within the guide member of a conventional torque converter.

However, under conditions of low slip the fluid occupies the part of the potential circuit illustrated in Figure 2 and thus the fluid does not contact the reaction member 23 and so the coupling performs without torque multiplication as a simple fluid coupling.

Because in the above embodiment of the present invention described with reference to Figures 1 and 2 it is necessary for a stable oil volume to be maintained, the sealing arrangements must be adequate to ensure this and the seals and related bearings are engineered to operate for long periods with poor lubrication. In addition, as the temperature of the unit rises an internal static pressure is generated and so the construction and seals must be capable of withstanding this.

The embodiment without freewheel (Figure 1) is more economical but transition between high and low slip might under certain circumstances be improved if a free wheel is fitted.

Referring now to Figure 3, there is illustrated a hydrodynamic torque transmitter of essentially similar construction to that illustrated in Figure 1 except that means are provided for feeding fluid through the torque converter by means of an external pump. In Figure 3 the same reference numerals have been used as were used in Figure 1 to refer to corresponding parts. In Figure 3 only the exit path of fluid is illustrated, the entry path being illustrated in the modification shown in Figure 4 which is identical to that shown in Figure 3 except for the mounting of the reaction member 23a by means of a freewheel clutch 27a and analogous to the arrangement bearing the same reference numerals in Figure 2.

In Figure 3, the exit path is provided by means of a duct 30 in the sleeve 24 connected to a conduit 31 leading into the fixed frame 17 and then to a hydraulic supply circuit.

In Figure 4 the entry path of fluid is illustrated and comprises an entry conduit 32 leading to a further duct 33 provided in the sleeve 24, arrows illustrate the path of the fluid in Figures 3 and 4.

The design may be such as to allow inlet and outlet flow paths to be reversed.

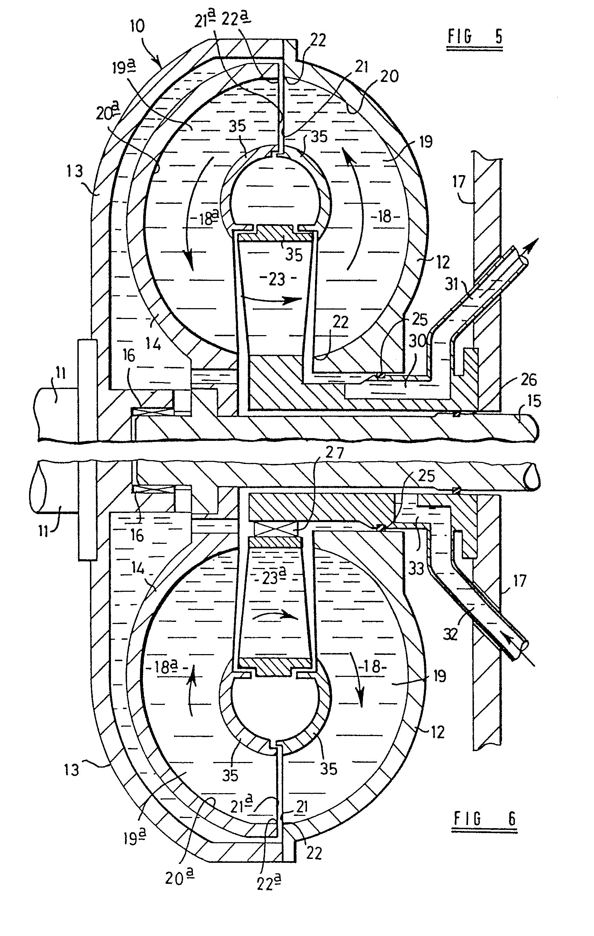

Referring now to Figures 5 and 6, these illustrate diagrammatically a conventional torque converter and torque converter-coupling respectively, again the same reference numerals have been used for corresponding parts as were used in Figures 3 and 4, and it will be seen that the only difference between the transmitters of Figures 5 and 6 and Figures 3 and 4 respectively is the provision of a guide member 35 on each of the impeller 12, turbine 14 and reaction member 23, 23a. In addition, the transmitters shown in Figures 5 and 6 differ from those illustrated in Figures 1 and 2 respectively in addition to the differences identified above compared with Figures 3 and 4 by the provision of inlet conduit and duct 32, 33 and outlet duct and conduit 30, 31.

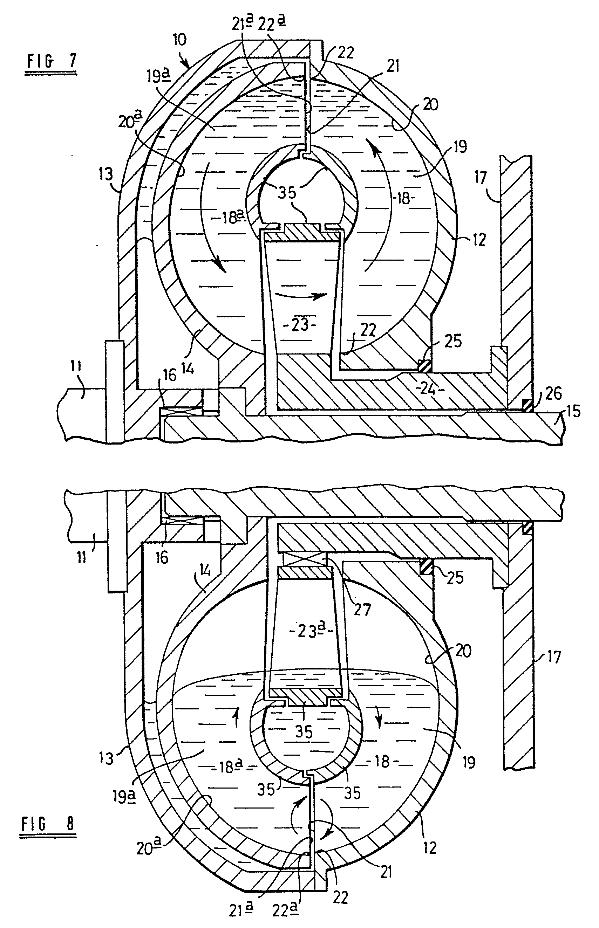

Figures 7 and 8 illustrate further hydrodynamic torque transmitters differing only in the provision of a freewheel reaction member 23a in Figure 8 compared with a fixed reaction member 23 in Figure 7. The transmitter illustrated in Figures 7 and 8 differs from that shown in Figures 5 and 6 only by omission of the entry conduit and duct 32, 33 and exit duct and conduit 30, 31. The devices illustrated in Figures 7 and 8 are partly filled with fluid in a similar manner to the transmitter of Figures 1 and 2 and embodying the invention.

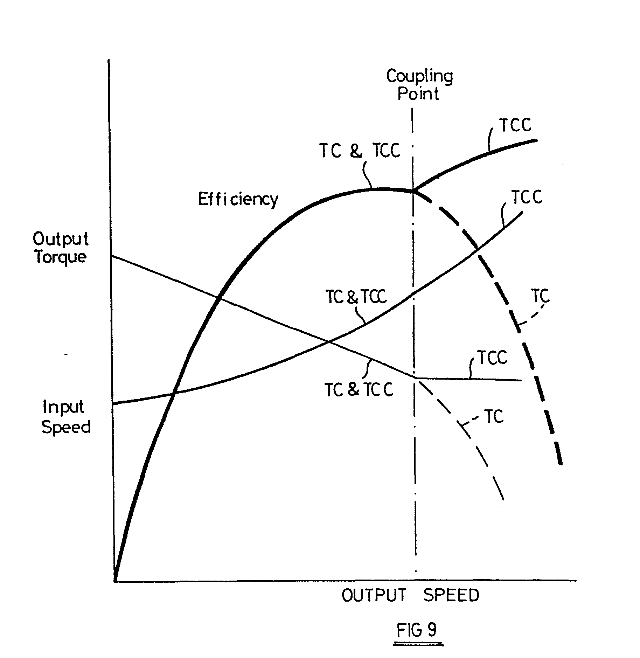

Referring now to Figure 9, this illustrates graphically the variation in input speed, output torque and efficiency with output speed in the case of the torque converter-coupling shown in Figure 6 in full line and in the case of the torque converter shown in Figure 5 in dotted line. The nature of these curves is well known to those skilled in the art and further discussion is not necessary and they are referred to only with a view to comparison purposes.

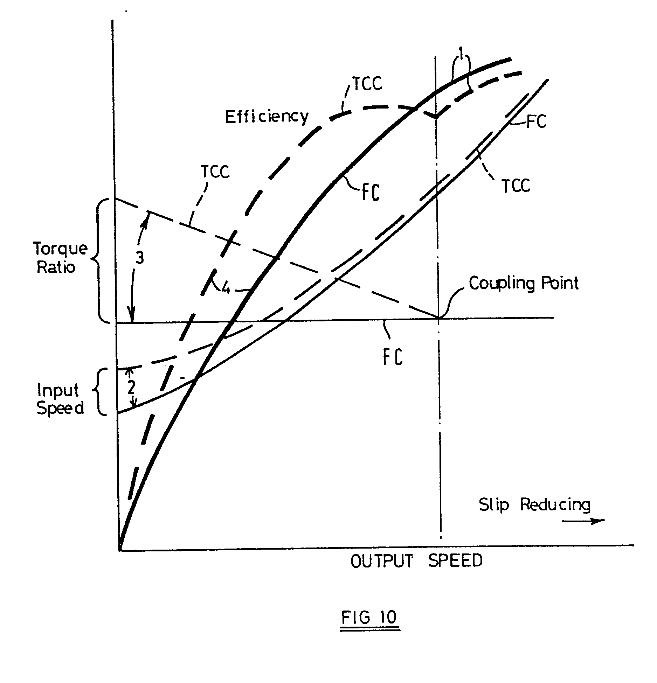

Referring now to Figure 10, there is illustrated a comparison between the torque converter-coupling as shown in full line in Figure 9 and in dotted line in Figure 10, and comparable curves in full line illustrating the characteristics of a fluid coupling, i.e. a transmitter without any reaction member. It will be seen that a fluid coupling has a higher efficiency of coupling in the low slip area, see 1 in Figure 10, and a higher capacity at stall, see 2 in Figure 10. In contrast, a torque converter-coupling provides torque multiplication compared with the unit torque transmission of a coupling, see 3 in Figure 10, and has advantageous efficiency at high slip, see 4 in Figure 10.

As mentioned previously, the aim of the present invention is to provide a torque transmitter which has the characteristics of a torque converter at high slip and the characteristics of a fluid coupling at low slip and thus to combine the advantages of each type of transmitter.

Thus the object is to provide a torque transmitter which will give torque converter characteristics for starting purposes or for reducing the number of gearbox ratios necessary and which on high output speed, low slip or light load conditions, will attain efficiencies comparable with those of fluid couplings. The "softer" match feature at stall is required to reduce idling losses but the high speed, low slip capacity must be adequate in order to keep the size of the torque transmitter acceptable.

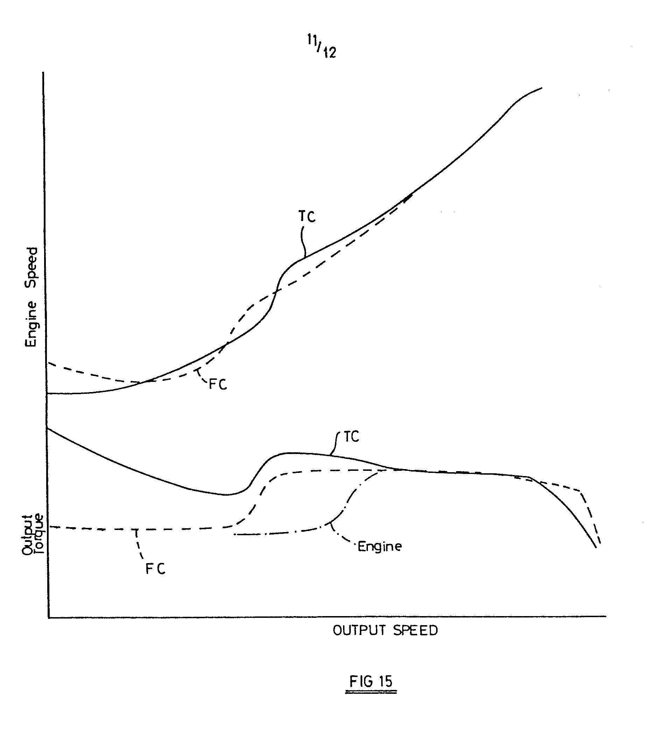

These characteristics are particularly useful in engines where a stall torque into the torque transmitter is low whilst the torque increases at higher speeds. For example, supercharged or turbocharged engines are particularly susceptible to such characteristics since the forced induction facility is not effective until the engine speed rises to a value significantly above the stalled engine speed. This is illustrated in Figure 15 where the chain dotted line shows engine performance characteristics and the full line and dotted line respectively show the characteristics of a torque converter and of a fluid coupling matched to the engine.

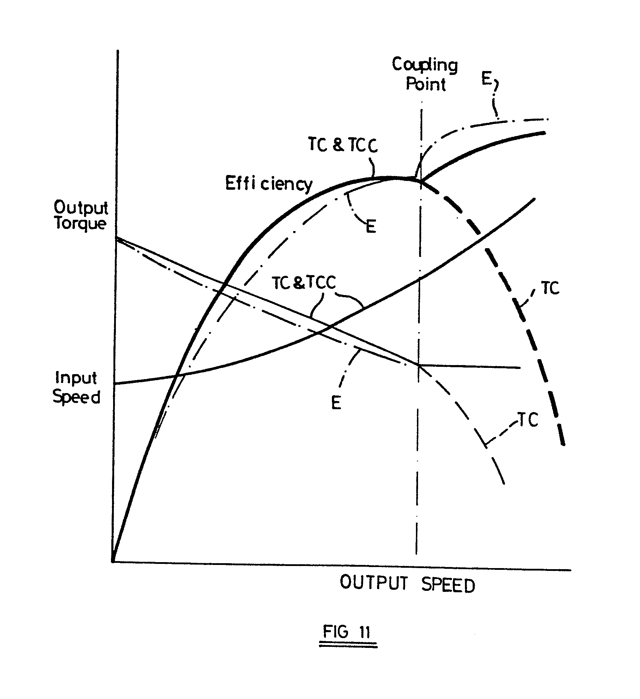

Referring now to Figure 11, it will be seen that the embodiment illustrated in Figure 1 achieves these requirements. In Figure 11 the characteristics illustrated in Figure 9 have been superimposed on the characteristics obtained with the torque transmitter shown in Figure 1, which are illustrated in chain dotted outline. It will be seen that the efficiency of the preferred embodiment shown in Figure 1 is greater than that of a conventional torque converter-coupling; approaching that of a simple fluid coupling as illustrated in Figure 10, whilst there is less efficiency in the torque conversion range but, of course, this is only during the relatively small time of the total operation of the torque converter in normal automotive, and in particular 'bus, applications. A significant torque multiplication effect is achieved.

The addition of a free-wheel reaction (Fig.2) is normally not considered necessary, as no significant change in performance is achieved.

It is considered however that under certain circumstances the transition between the "torque conversion" condition when the fluid circuit is such that oil flows through the reaction member, and the low slip operating range may be such that some flow will pass through the reaction member giving unnecessary losses and in this case a freewheel may be provided for the reaction member.

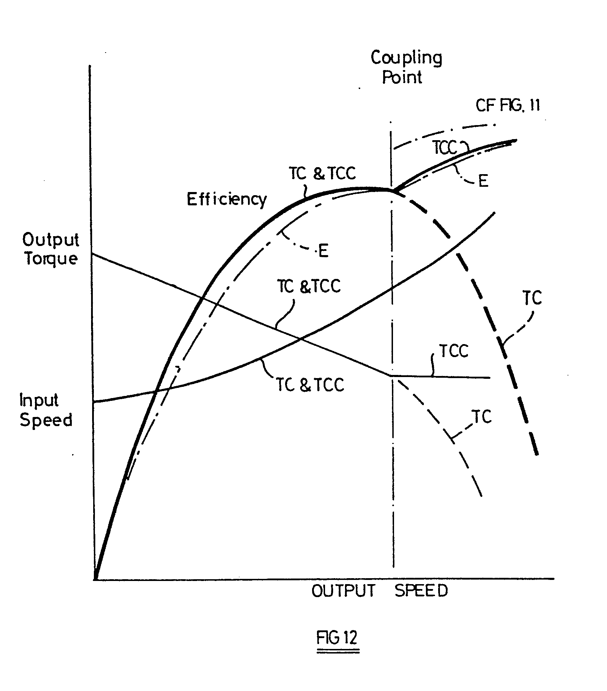

If such a freewheel reaction member is provided, a circulated unit as illustrated in Figure 4 may be provided and Figure 12 illustrates the performance characteristics thereof. The characteristics of Figure 9 are reproduced and those of the torque transmitter of Figure 4, shown in chain dotted line. It will be seen that in the low slip range the efficiency is comparable with that of a conventional torque converter-coupling and therefore the embodiment illustrated in Figure 4 has no performance characteristics which are advantageous compared with those of a conventional torque converter-coupling. However, the advantage of the embodiment shown in Figure 4 is that of reduced manufacturing costs because of the omission of the guide member and the simple turbine and impeller blades.

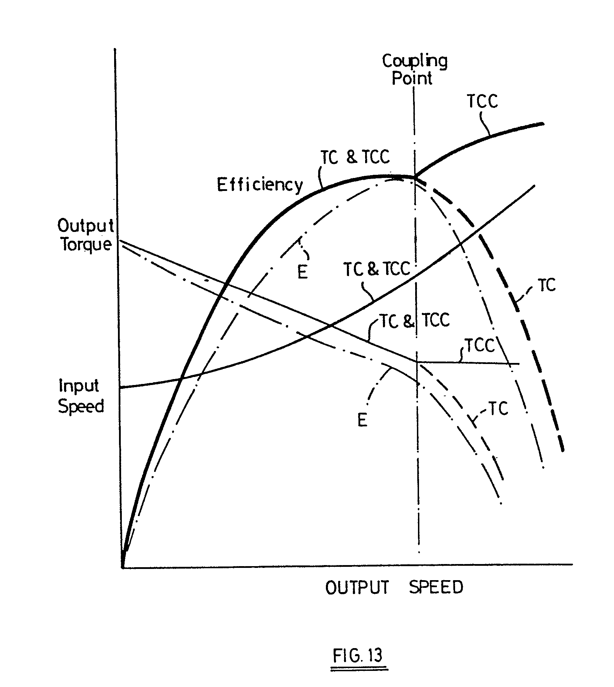

For complete understanding, Figure 13 illustrates the performance characteristics of the transmitter illustrated in Figure 3 where the reaction member is fixed to frame. The characteristics of Figure 9 are reproduced and those of the torque transmitter of Figure 3, shown in chain dotted line. It will be seen that all the characteristics are significantly poorer than that of a conventional torque converter let alone a torque converter-coupling and this demonstrates that the transmitter shown in Figure 3, whilst being more economical to produce than a conventional torque converter, has poorer performance characteristics and thus would not be likely to find commercial application since the saving in costs and manufacture would probably be more than off-set by the reduction in performance characteristics.

Another possibility with an essentially conventional torque converter or torque converter-coupling, not illustrated, is to externally charge and circulate oil, which is particularly useful for cooling purposes, and to introduce a capacity limiter to keep the oil flow at such a rate that the volume of oil in the torque converter is similar to that in Figures 1 and 2 and in this case a fixed or freewheeling reaction member could be provided under the same considerations as discussed with reference to Figures 1 and 2.

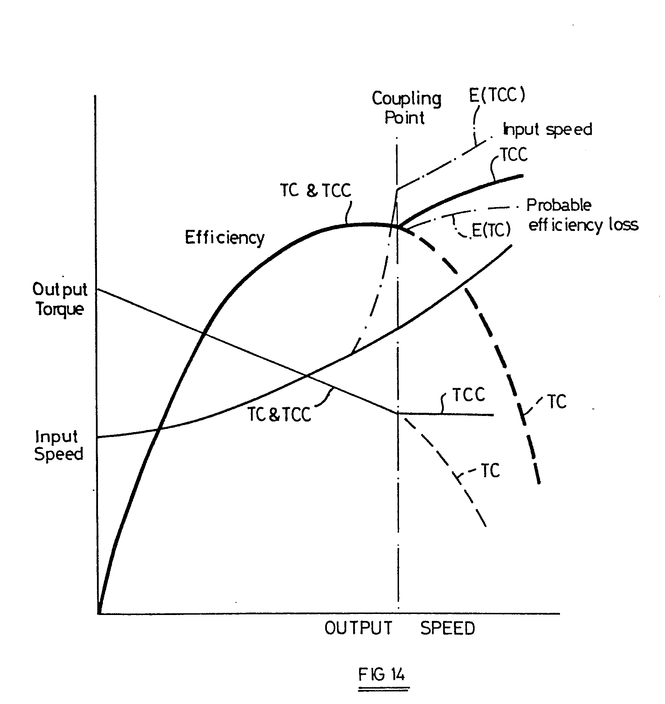

Figure 14 illustrates performance characteristics of a conventional torque converter/converter-coupling when not provided with a circulating oil flow or if provided with a circulating oil flow then with a capacity limiter so that the volume of fluid within the transmitter is similar to that illustrated and described with reference to Figures 1 and 2. The fluid flow in the high slip region would be similar to that shown in Figure 7 and the fluid flow in the low slip region would be similar to that shown in Figure 8.

As can be seen from Figure 14, in both the case of a fixed and a freewheeling reaction member, i.e. torque converter and torque converter-coupling an unstable condition arises as the coupling point is reached. There is thereafter a sudden input speed increase which gives a poor capacity and it is anticipated that there would be an efficiency loss compared with a conventional torque converter-coupling, although not with a conventional torque converter.

It will be seen from the above comparisons that the embodiments illustrated in Figures 1 and 2 achieve better performance characteristics and with cheaper construction than is achieved with conventional torque converters/torque converter-couplings having the advantage of torque conversion at high slip and fluid coupling at low slip. Similar performance and cost savings can be achieved utilising a circulating system, provided that a capacity limiter is provided.

Where no capacity limiter is provided and the circuit is full of oil then it is necessary to provide a freewheel reaction member (as in Fig.4)for the operating characteristics to be acceptable but even so the operating characteristics are less satisfactory than a conventional system but there is a saving of cost.

If a fully circulating system and a fixed reaction member is utilised, or if a conventional torque converter or torque converter-coupling is operated only partially filled, the performance characteristics are entirely unsatisfactory.

In many applications a hydrodynamic transmitter as described with reference to Figures 1 and 2 suffers from overheating which can cause damage to seals and consequently lead to leaks.

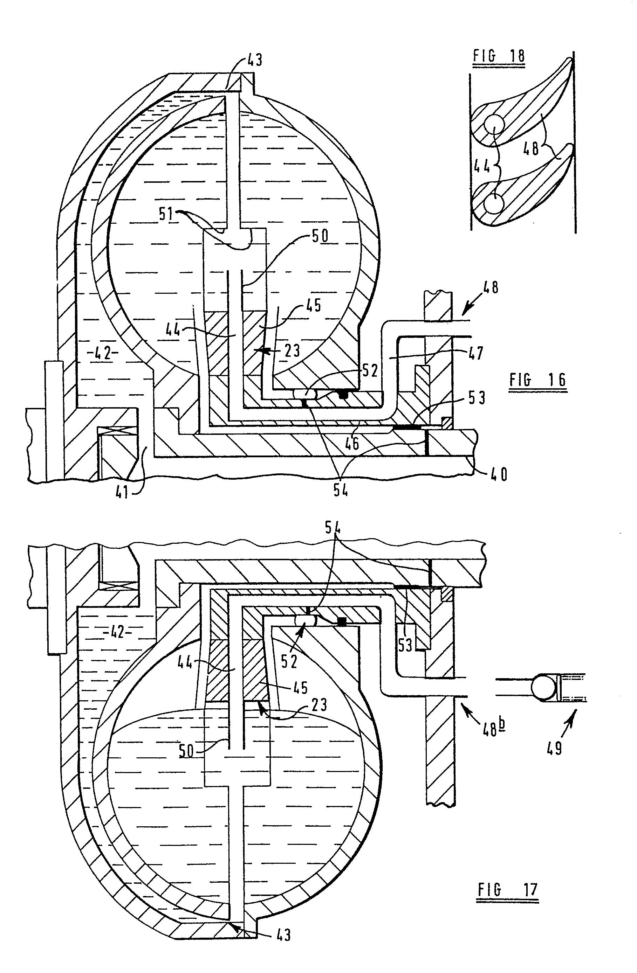

In such applications, the modification illustrated in Figures 16 and 17 is preferred since oil circulation is permitted, leading to cooling, whilst maintaining the "part-filled" condition obtaining in the embodiments shown in Figures 1 and 2. In addition to providing a cooling circuit, the circulation of the oil allows bearings and seals to be lubricated thereby avoiding the need for seals and related bearings to be engineered to operate for longer periods, as has been necessary with the arrangements of Figures 1 and 2 described above.

Referring now to Figures 16 to 18, the same reference numerals have been used in these Figures as were used in Figure 1 to refer to corresponding parts.

The only difference between the transmitter of Figures 16 to 18 compared to that of Figure 1 is that means are provided for circulation of fluid. More particularly, oil is fed into the transmitter along an axial passage 40 formed in the output shaft 15 and passes via radial passages 41 into the space 42 between the turbine 14 and impeller casing 13 and enters the fluid circuit between the turbine and impeller as indicated at 43.

The oil leaves the circuit via passages 44 formed, for example by drilling, in the blades 45 of the reaction member 23. The passages 44 communicate with an axially extending passage 46 formed in the sleeve 24 which communicates via pipes 47 with an oil outlet 48 displaced above the centreline of the transmitter. If desired, as illustrated in Figure 17, the outlet may be positioned, as indicated at 48b, below the centreline in which case a non-return valve 49 is provided having a light spring so that there is little restriction to outflow of oil. Such a valve is provided to ensure that oil does not syphon off when the transmitter is stationary. It is important to note that back pressure is minimised and, if desired, more than one outlet passage 46 and associated pipes may be provided.

In the embodiment illustrated, an oil tube 50 is provided as an extension of the passage 44 in the impeller blades 45 for a reason hereinafter to be described, and the impeller and turbine blades may be cut back, as illustrated at 51.

Referring now particularly to Figure 16, there is illustrated the condition of the transmitter under conditions of high slip, i.e. under conditions of torque multiplication. In this condition, the impeller generates a head of oil which exceeds that generated by the turbine because of the lower speed of the turbine, and the generated circulation follows fully the turbine blading peripheral contour, passing then through the reaction member blades and thus giving torque multiplication. There is therefore no disadvantage in having the transmitter full of oil. The transmitter therefore operates as illustrated in Figure 16 with oil entering through the passage 40, 41 and leaving through the passage 44 and extension tube 50.

Referring now particularly to Figure 17, when the transmitter is operating under conditions of low slip, the requirement is to keep the oil circulation from entering the reaction member in order to minimise losses. Due to the high centrifugal head generated by impeller and turbine and because the fixed reaction member does not generate a head, oil will exhaust naturally through the reaction member passages 44. This exhaust will be balanced by the external oil feed into the circuit via passages 40 and 41.

The conditions of operation give rise to variations in the head due to idling or high speed differences and slight slip effects. Therefore, the extension tubes 50 are provided to give sufficient head to cause outflow against any pipe resistance. It is considered that in certain circumstances the extension tubes 50 may not be required and therefore it is within the scope of the invention to omit these.

It should be noted that if a cooler is fitted at the outlet, this will add to resistance and it is therefore considered desirable to provide a cooler in the inlet circuit, although this is not best for cooling efficiency. In practice it may be found possible to provide a cooler in the oil outlet without incurring unacceptable resistance to outflow.

Moreover, resistance in outflow may be benefited by inclining the extension tubes 50 and/or mitreing the end to optimise pick-up conditions.

Positioning of the pipes 50 and their configuration, and of the oil flow passages may be varied from that illustrated as proves necessary for particular operating circumstances.

Because of the discharge of oil for the reasons explained above, oil is caused to circulate out of operative contact with the reaction member blades in the same way as is achieved with the embodiment of Figure 1. In the embodiment illustrated in Figures 16 and 17, additional bearings 52 are provided, together with oil bleed passages 54 which are fed from the inlet and outlet oil feed circuitry.

If desired, in a modification the reaction member may be provided with a free wheel.

The preferred embodiments shown in Figures 1, 2, 16, 17 and 18 have the following advantages.

Oil flows through the reaction member under high slip conditions thus giving torque conversion, but on low slip conditions the impeller and turbine generate fluid heads which are more nearly equal than under high slip conditions and an insufficient head is generated to cause flow through the reaction member. Thus under low slip conditions, circulation losses are reduced, the reaction member may be fixed (Figures 16-18 only) and the outer portions of the impeller and turbine blades act as a simple fluid coupling.

Because the blades of the impeller and turbine are simple blades and there is no core member, manufacture of these components is considerably simplified since the separate core elements required to cast the impeller and turbine components when a central guide member is present are avoided and in addition the coring required to produce simple open blades is again more simple than with the complex blade shapes conventionally present in a torque converter or torque converter coupling.

If desired, some blade angularity may be provided in the impeller and turbine blades, it being possible to do this and retain simple casting techniques.

The embodiment shown in Figures 16 to 18 has the additional advantage of oil circulation thereby providing cooling and facilitating the long life of seals and bearings. In addition, the need for an accurate volume of oil to be used is eliminated which is particularly helpful since the volume of oil varies with temprature and the self-compensating effect provided is a considerable advantage.

The transmitters described hereinbefore are particularly suitable for use in a transmission driven by a turbo charged internal combustion engine such as a diesel engine and which includes a constant mesh change speed gear box. The transmission may be incorporated in a vehicle such as an omnibus, or other road vehicle or a railway locomotive or a rail car.

CLAIMS:

1. A hydrodynamic torque transmitter comprising a casing and first and second bladed members, said members being mounted for rotation relative to a frame, each bladed member having a peripheral wall and a plurality of blades extending transversely thereto so as to define a pocket between each pair of adjacent blades and bounded by the blades and peripheral wall, the pockets each having an open mouth, the open mouths of the pockets of one member being disposed in face-to-face relationship with the open mouths of the pockets of the other member so that the pockets co-operate to define a potential circuit for fluid around which, in use, fluid circulates to transmit torque between the bladed members, there being a reaction member disposed in the potential circuit between the first and second members and being prevented from rotation relative to the frame at least in the opposite direction of rotation to the first and second members, the blades of the first and second members and of the reaction member being disposed and arranged to produce a torque multiplication effect when, in use, fluid flows past the reaction member blades, each pocket comprising an unobstructed volume bounded by the blades and the peripheral wall of the member and having an unobstructed open mouth bounded by the free edges of the blades and peripheral wall.

2. A transmitter according to Claim 1 wherein the first member is an impeller and the second member a turbine.

3. A transmitter according to any one of the preceding claims wherein the reaction member is fixed relative to the frame.

4. A transmitter according to Claim 3 wherein means are provided for circulating fluid into and out of the fluid circuit.

5. A transmitter according to Claim 4 wherein said means includes radial passage means provided in the reaction member blades for egress of fluid.

6. A transmitter according to any one of Claims 1 to 4 wherein the reaction member is provided with free-wheel clutch means to permit the reaction member to rotate relative to the frame in the same direction as the impeller and turbine but to prevent rotation in the reverse direction.

7. A hydrodynamic torque transmitter installation comprising a torque transmitter according to any one of Claims 1 to 5 wherein said fluid circuit is partly filled with fluid, the volume of fluid being such that, in use, at low slip ratios the fluid circulation in said circuit is such that the fluid does not at least substantially contact the reaction member whereby the transmitter has the characteristics of a fluid coupling, whilst at high slip ratios, the fluid circulation in said circuit is such that the fluid does contact the reaction member to provide a torque multiplication effect so that the transmitter functions as a torque converter.

8. An installation according to Claim 7 when dependant on any one of Claims 1 to 3 wherein the fluid is maintained within the fluid circuit.

9. An installation according to Claim 7 when dependant upon Claim 4 or Claim 5 wherein the fluid is circulated into and out of the fluid circuit.

10. An installation according to Claim 9 when dependant upon Claim 5 wherein, in use, when the installation is operated under conditions of:-
   (a) high slip, said circuit is full of oil; and
   (b) low slip centrifuging of the oil causes oil to egress from said circuit through said radial passage means, said reaction member not rotating and therefore not providing a counter head.

11. An installation according to Claim 10 wherein said radial passage means include a portion extending radially outwardly of their associated reaction member blades.

12. A hydrodynamic torque transmitter installation comprising a torque transmitter according to Claim 6 wherein said circuit is partly filled with fluid, the volume of fluid being such that, in use, at low slip ratios the fluid circulation in said circuit is such that the fluid does not at least substantially contact the reaction member whereby the transmitter has the characteristics of a fluid coupling, whilst at high slip ratios, the fluid circulation in said circuit is such that the fluid does contact the reaction member to provide a torque multiplication effect so that the transmitter functions as a torque converter-coupling.

13.   A hydrodynamic torque. transmitter installation comprising a torque transmitter according to Claim 6 wherein said fluid circuit is maintained fully filled with fluid.

0099082

FIG. 1

FIG 2

FIG. 3

FIG. 4

FIG 5

FIG 6

0099082

FIG 7

FIG 8

FIG 9

FIG 10

FIG 11

FIG 12

0099082

9/12

FIG. 13

0099082

FIG 14

FIG 15

FIG 18

FIG 16

FIG 17

## EUROPEAN SEARCH REPORT

European Patent Office

Application number

EP 83106721.0

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. ³) |
| X | FR - A - 1 047 002 (ETS. NEYRPIC) <br> * Totality * | 1,2,3, 7 | F 16 H 41/20 |
| X | GB - A - 1 118 619 (ELEKTRO-MECHA-NIK) <br> * Totality * | 1,2,3, 7 | |
| X | US - A - 2 404 657 (ROBERTS) <br> * Totality * | 1,2,6 | |
| X | US - A - 3 124 973 (EGBERT) <br> * Totality * | 1,2 | |
| X | US - A - 3 287 908 (MAMO) <br> * Totality * | 1,2,3 | |
| | | | TECHNICAL FIELDS SEARCHED (Int. Cl. ³) |
| A | GB - A - 377 649 (KIEP) <br> * Totality * | 4,8,13 | F 16 H 41/00 |
| A | US - A - 3 409 968 (DENES) <br> * Totality * | 5 | |
| A | DE - A - 1 750 198 (RENK AG) <br> * Totality * | 5 | |
| A | DE - A - 2 045 959 (DAIMLER-BENZ) <br> * Totality * | 9,10, 12 | |

The present search report has been drawn up for all claims

| Place of search | Date of completion of the search | Examiner |
|---|---|---|
| VIENNA | 22-09-1983 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent
Office

**EUROPEAN SEARCH REPORT**

EP 83106721.0

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| A | GB - A - 376 877 (DAIMLER-COMP.)  * Totality * | 11 | |
| | | | **TECHNICAL FIELDS SEARCHED (Int. Cl.²)** |

EPO Form 1503.2   06.78